# EUROPEAN PATENT SPECIFICATION

(11) **EP 1 934 143 B1**
(45) Date of publication and mention of the grant of the patent: **25.09.2019**
(21) Application number: 06825311.1
(22) Date of filing: 03.10.2006
(51) Int. Cl.: C02F 1/00, C02F 103/22

(54) **METHOD FOR ON-SITE RECLAMATION, RECONDITIONING, AND REAPPLICATION OF POULTRY PROCESSING WATER**
VERFAHREN ZUR ON-SITE-WIEDERGEWINNUNG, -REKONDITIONIERUNG UND -WIEDERANWENDUNG VON GEFLÜGELVERARBEITUNGSWASSER
PROCÉDÉ POUR LA RÉCUPERATION, LE RECONDITIONNEMENT ET LA RÉUTILISATION SUR SITE D'EAU DE TRAITEMENT DE VOLAILLES

(30) Priority: 13.10.2005 US 249557
(43) Date of publication of application: 25.06.2008
(73) Proprietor: Ecolab USA Inc., St. Paul, MN 55102 (US)
(72) Inventor: HILGREN, John D., Shoreview, MN 55126 (US); BUEHLER, Jeffrey L., Wildwood, MO 63038 (US); PILLIARD, Darrell H., St. Louis, MO 63138 (US); MUSGRAVE, Scott A., Manchester, MO 63021 (US)
(74) Representative: Godemeyer Blum Lenze Patentanwälte Partnerschaft mbB - werkpatent
(86) International application number: PCT/US2006/038333
(87) International publication number: WO 2007/047076

(56) References cited:
- WO-A2-2004/043162
- US-A- 3 440 949
- US-B1- 6 182 833

## Description

### BACKGROUND OF THE INVENTION

The present invention relates to the field of filtering poultry processing water for reapplication, In particular, the present invention relates to a method for on-site reclamation, reconditioning, and reapplication of poultry processing water.

The United States Department of Agriculture (USDA) has implemented numerous regulations regarding the operation of food processing plants, in particular, the operation of poultry processing plants. Without proper sanitization of the poultry and the equipment during the poultry processing application, the likelihood of Salmonella and other bacteria being present on the final product is increased. To meet USDA regulations, the poultry processing industry consumes a large amount of water when slaughtering, processing, and cleaning poultry for consumption as well as other uses. It is thus desirable to minimize the amount of fresh water used in order to reduce water costs, as well as labor costs, without compromising the efficiency of the process.

One of the stages in poultry processing is the inside-outside bird washing stage. At this stage of the process, the poultry has already been slaughtered, bled, defeathered, and eviscerated. Certain body parts of the poultry (i.e. heads, claws, detritus) may have also been removed. The carcasses of the poultry must then be cleansed to remove any remaining debris and microorganisms from the poultry in order to meet health and safety standards. This is typically accomplished by spraying high impact water from a washing apparatus onto the body of the poultry to strip away any undesirable matter. The matter stripped from the poultry is carried away by the water to a sewer that leads to a coarse filter. The coarse filter also receives wastewater from other slaughter processes. Larger solids in the wastewater that are captured by the coarse filter are typically sent to a rendering facility. The filtered wastewater goes on to a treatment facility to prepare it for safe discharge into the environment.

A reciprocating power sprayer for cleaning a rotating cylindrical wastewater screen of the type formed of tubular perforate wedgewire is disclosed in US 6 182 833 B. The spray is reciprocated on an elongated pneumatic cylinder which is arranged in parallelism along the cylinder wastewater screen. Controls are provided for automatically controlling the reciprocation of the spray.

An antimicrobial application system is disclosed in WO 2004/043162 A, comprising an antimicrobial application unit and a recycle unit. An initial, dilute antimicrobial composition is prepared. The composition is provided to the antimicrobial application unit and applied to workpieces, such as raw poultry, After application to the workpieces, the composition is returned to the recycle tank. The concentration of the antimicrobial in the recycle tank is monitored, and additional antimicrobial is automatically added if the concentration of the antimicrobial in the composition falls below a desired amount. The composition is periodically diverted to a capture tank, and the antimicrobial is selectively removed from the composition. The removed antimicrobial and remaining composition are then disposed of in appropriate manners. The antimicrobial is preferably a quaternary ammonium compound, is more preferably an alkylpyridinium chloride, and is most preferably cetylpyridinium chloride.

There are currently significant obstacles to having an efficient on-site reconditioning system that places high volumes of processing water in a condition suitable for reuse after the inside-outside bird washing stage. One of the primary obstacles is clogging of the water handling and reconditioning equipment due to the presence of large and small debris in the reclaimed water. The reclaimed water collected from the washing apparatus may contain poultry necks, wings, or other body parts that may block pumps and pipelines. In addition, the reclaimed water may also contain smaller debris, such as feather strands. The feather strands clog fine filters by wrapping around the dividers that separate the openings and eventually obstruct the openings. Other sources of filter clogging are the fats and oils that wash off the poultry. The fats and oils further exacerbate filter clogging by solidifying on the filter. Additionally, if the reclaimed water is to be reapplied during the inside-outside bird washing stage, any small debris and fat/oils remaining in the reclaimed water may also clog the spray nozzles used to cleanse the poultry.

In addition to equipment blockages, another obstacle to efficiently reclaiming and reapplying processing water is the high level of bioburden (i.e. microorganism load) in the reclaimed water. If untreated, the reclaimed water can contain upwards of 10,000 bacteria per milliliter. According to USDA guidelines, solutions used to wash raw poultry may not be re-used for this purpose unless measures are taken to reduce microbiological contamination that may adulterate the product.

### BRIEF SUMMARY OF THE INVENTION

The present invention provides a method for on-site reclamation, reconditioning, and reapplication of poultry processing water, the method comprising:
(a) collecting processing water from a washing apparatus (26) into a first receptacle (28); (b) pumping the processing water from the first receptacle (28) to a filtering apparatus; (c) expelling the processing water into the filtering apparatus; (d) filtering waste from the processing water to obtain a filtrate; (e) spraying an antimicrobial solution and water onto the filtering apparatus; (f) transporting the waste from the processing water to a waste receptacle (34); (g) collecting the filtrate and antimicrobial solution into a second receptacle (38); (h) purging a portion of the filtrate from the second receptacle (38) to the waste receptacle (34); (i) pumping the filtrate back to the washing apparatus (26); and (j) spraying the poultry with the filtrate, wherein the filtering apparatus is a rotary filter and consists of a series of openings that allow a substantial portion of reclaimed water to pass through the filter while retaining solids greater than a given dimension, the filter being cylindrical and rotating around a nearly horizontal axis and consisting of durable or non-durable materials.

### BRIEF DESCRIPTION OF THE DRAWINGS

FIG. 1 is a diagram of a processing water reapplication system described herein.
FIG. 2 is a block diagram of the processing water reapplication system described herein.

### DETAILED DESCRIPTION

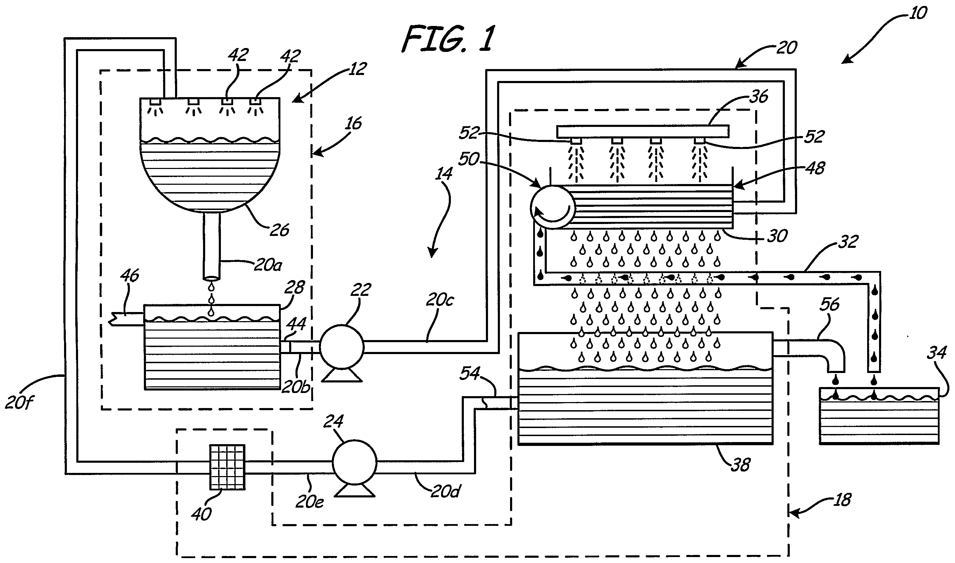

FIG. 1 is a diagram of a processing water reapplication system 10 described herein, Reapplication system 10 is a poultry processing water reclamation, reconditioning, and reapplication system that permits the reuse of processing water during poultry processing by reclaiming and reconditioning the processing water. Although FIG. 1 shows reapplication of the processing water in conjunction with inside-outside bird washing stage 12, the processing water may be used at any stage of poultry processing. Processing water reapplication system 10 is beneficial for reducing fresh water consumption and labor costs.

Reapplication system 10 generally includes circulation system 14, washing system 16, and filtering system 18. Circulation system 14 includes piping 20, first pump 22, and second pump 24. Washing system 16 includes washing apparatus 26 and first receptacle 28. Filtering system 18 includes filter 30, removal channel 32, waste receptacle 34, dispenser 36, second receptacle 38, and screen 40.

Circulation system 14 circulates reclaimed processing water through reapplication system 10. Piping 20 of circulation system 14 generally includes debris line 20a, first intermediate line 20b, second intermediate line 20c, third intermediate line 20d, fourth intermediate line 20e, and discharge line 20f, Debris line 20a allows reclaimed water and debris to flow from washing apparatus 26 to first receptacle 28. First intermediate line 20b connects first receptacle 28 to first pump 22. Second intermediate line 20c connects first pump 22 to filter 30. Third intermediate line 20d connects second receptacle 38 to second pump 24. Fourth intermediate line 20e connects second pump 24 to screen 40. Discharge line 20f connects screen 40 to washing apparatus 26. In one aspect, piping 20 has a diameter of between 5.1 and 15.2 cm (2 and 6 inches).

First pump 22 of circulation system 14 is generally positioned immediately downstream from first receptacle 28 and pumps reclaimed water from first receptacle 28 through first intermediate line 20b and second intermediate line 20c to filter 30. In one aspect, first pump 22 is an air-operated diaphragm pump having 5.1 to 10,2 cm (2 to 4 inch) diameter inlets, outlets, and flap-style check valves.

Second pump 24 of circulation system 14 is generally positioned immediately downstream from second receptacle 38 and pumps reclaimed water from second receptacle 38 through third intermediate line 20d and fourth intermediate line 20e. After the reclaimed water passes through screen 40, second pump 24 pumps the reclaimed water through discharge line 20f back to washing apparatus 26.

Washing system 16 generally includes washing apparatus 26 and first receptacle 28. Washing apparatus 26 has a plurality of washing nozzles 42 that dispense processing water from washing apparatus 26 onto the poultry to cleanse the poultry carcasses as they pass through inside-outside bird washing stage 12. As the processing water rinses off debris from the poultry, the reclaimed water and debris are collected in first receptacle 28. In one aspect, washing apparatus nozzles 42 have round to oval openings of 0,18 to 1.07 cm (0.07 to 0.42 inches) in diameter

First receptacle 28 collects the reclaimed water and debris removed from the poultry as they pass through washing apparatus 26. First receptacle 28 includes a re-use outlet 44 and an overflow outlet 46. Re-use outlet 44 is positioned below overflow outlet 46 and is connected to first pump 22 by first intermediate line 20b. Overflow outlet 46 is used to ensure that the reclaimed water collected in first receptacle 28 does not exceed the capacity of first receptacle 28. In one aspect, re-use outlet 44 and overflow outlet 46 have diameters of between 5.1 and 15.2 cm (2 and 6 inches).

Filtering system 18 is the reconditioning step for the reclaimed processing water from inside-outside bird washing stage 12. Filter 30 rotates as retained material and reclaimed water travel from first end 48 of filter 30 to second end 50 of filter 30. Filter 30 consists of a series of openings that allow a substantial portion of reclaimed water to pass through filter 30 while retaining solids greater than a given dimension. In one aspect, filter 30 retains solids greater than 0.003 to 0.03 cm (0.001 to 0.010 inches) in a given dimension. In one aspect, filter 30 is cylindrical, rotates around a nearly horizontal axis, and consists of durable materials selected from a group including, but not limited to: parallel wedge-shaped wires (i.e. "wedgewire"), woven wires, perforated sheet, textiles, permeable membranes, or combinations thereof. In an alternative aspect, filter 30 is cylindrical, rotates around a nearly horizontal axis, and consists of non-durable materials selected from a group including, but not limited to: textiles, permeable membranes, or combinations thereof. In an aspect not in accordance with the present invention, filter 30 is planar, rotates around a nearly vertical axis, and consists of durable materials selected from a group including, but not limited to: parallel wedge-shaped wires (i.e. "wedgewire"), woven wires, perforated sheet, textiles, permeable membranes, or combinations thereof. In an alternative aspect not in accordance with the present invention, filter 30 is planar, rotates around a nearly vertical axis, and consists of non-durable materials selected from a group including, but not limited to; textiles, permeable membranes, or combinations thereof, Although only one filter 30 is depicted in FIG. 1, more than one filter may be used.

Removal channel 32 is connected to filter 30 and removes any debris filtered from the reclaimed water in filter 30, such as feather strands. After the debris is removed from filter 30, the debris travels through removal channel 32 into waste receptacle 34.

Dispenser 36 is positioned proximate to filter 30 and holds antimicrobial solution and water. Dispenser 36 includes equipment necessary to prepare the antimicrobial solution and to deliver the antimicrobial solution and water with enough force to filtering system 18 to remove debris from filter 30. The antimicrobial solution and water must also have a flow rate that is adequate to cause filtrate from filter 30 to be purged through overflow outlet 56 of second receptacle 38 during normal operation, In one aspect, the flow rate is adequate to purge 5 to 50% of the filtrate from filter 30 through overflow outlet 56. In one aspect, the antimicrobial solution and water are dispensed from dispenser 36 onto filter 30 using outlet 52 and exert a theoretical impact of at least 2.7 to 26.7 N (0.6 to 6 pounds-force) when measured 30.5 cm (12 inches) away from filter 30. In an alternative aspect, the water exerts a theoretical impact of between 0.4 to 2.2 N (0.1 to 0.5 pounds-force) when measured 30.5 cm (12 inches) away from filter 30. In another aspect, the antimicrobial solution and water are dispensed from dispenser 36 to two locations in filtering system 18: (1) onto filter 30 using outlet 52, and (2) into second receptacle 38. In an alternative aspect, water is dispensed from dispenser 36 onto filter 30 using outlet 52 while the antimicrobial solution is dispensed from dispenser 36 into second receptacle 38.

In one aspect, the antimicrobial solution is a peroxyacid mixture comprising acetic acid, octanoic acid, hydrogen peroxide, peroxyacetic acid, peroxyoctanoic acid, and 1-hydroxyethylidene-1,1-diphosphonic acid with trade name INSPEXX 100. In an alternative aspect, the antimicrobial solution is selected from a group of chlorinated compounds including, but not limited to: chlorine dioxide, monochloramine, acidified sodium chlorite, and mixtures thereof. In an alternative aspect, the antimicrobial solution is selected from a group of non-chlorine halogen compounds including, but not limited to: iodines, iodophors, bromines, brominated compounds, and mixtures thereof. In an alternative aspect, the antimicrobial solution is selected from a group of quaternary ammonium compounds including, but not limited to: quaternary ammonium chlorides, cetylpyridinium chloride, and mixtures thereof. In an alternative aspect, the antimicrobial solution is comprised of organic acids (e.g., lactic acid, citric acid, propionic acid), mineral acids (e.g., phosphoric acid, hydrochloric acid, sulfuric acid), and mixtures thereof. In an alternative aspect, the antimicrobial solution comprises sodium metasilicate, potassium metasilicate, and mixtures thereof.

Second receptacle 38 collects the filtrate from filter 30 and any antimicrobial solution and water from dispenser 36 that bypassed filter 30. In one aspect, second receptacle 38 has a fluid capacity of 378.5 to 7570.8 liters (100 to 2000 gallons), is partitioned into 2 to 5 units in sequence, contains baffles, and has air injected into the liquid in second receptacle 38. In one aspect, the concentration of total peroxyacids in the antimicrobial solution in second receptacle 38 is 5 to 500 parts per million. Second receptacle 38 also includes a pump outlet 54 and an overflow outlet 56. Pump outlet 54 is positioned below overflow outlet 56 and is connected to second pump 24 by third intermediate line 20d. Overflow outlet 56 is used to remove any debris floating in the filtrate collected in second receptacle 38. During normal operation, the water level in second receptacle 38 is typically between pump outlet 54 and overflow outlet 56. In one aspect, pump outlet 54 and overflow outlet 56 have diameters of between 5.1 and 15.2 cm (2 and 6 inches) and overflow outlet 56 is a weir.

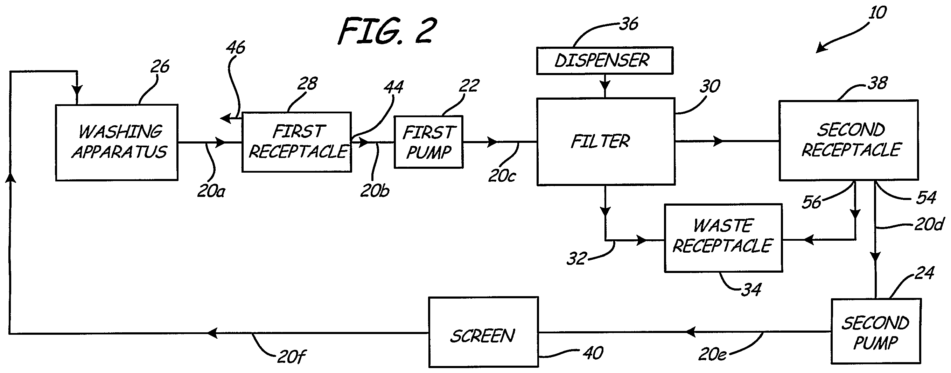

Filter screen 40 is located downstream from second receptacle 38 and is used to collect any debris that may have bypassed filter 30. Filter screen 40 may be any type of material that filters small matter. Although only one filter screen is shown in the figure, more than one filter screen may be used. In one aspect, filter screen 40 is a basket screen. Although, filter screen 40 is shown in FIG. 2 as being located downstream of second receptacle 38 and second pump 24, filter screen 40 may also be located downstream of second receptacle 38 and upstream of second pump 24.

FIG. 2 is a block diagram of processing water reapplication system 10 showing piping 20, first pump 22, second pump 24, washing apparatus 26, first receptacle 28, filter 30, removal channel 32, waste receptacle 34, dispenser 36, second receptacle 38, and filter screen 40. During inside-outside bird washing stage 12 of the poultry process, the poultry is first passed through washing apparatus 26 where the poultry is sprayed with processing water to remove any debris from the body of the poultry. The processing water and any debris smaller than debris line 20a are then passed through debris line 20a to first receptacle 28.

First pump 22 pumps the reclaimed water from re-use outlet 44 of first receptacle 28 through first intermediate line 20b and second intermediate line 20c. If flow through re-use outlet 44 is restricted, the reclaimed water is sent to the sewer through overflow outlet 46.

As the reclaimed water continues through circulation system 14 (shown in FIG. 1), the reclaimed water travels from second intermediate line 20c to filter 30, which continually rotates to prevent debris from clogging any particular section of filter 30. Filter 30 catches and removes the debris through removal channel 32. The debris travels through removal channel 32 to waste receptacle 34 where it is collected and removed.

Filter 30 is periodically or continually cleansed by antimicrobial solution and water, or water alone, from dispenser 36. The cleansing fluid released by dispenser 36 flows through filter 30 in a direction transverse to the direction the reclaimed water flows. The release of cleansing fluid onto filter 30 causes debris to exit through removal channel 32. After cleansing filter 30, the cleansing fluid flows through filter 30 and is reclaimed in second receptacle 38. In addition, water and antimicrobial solution from dispenser 36 may be directly added to second receptacle 38. The volume of antimicrobial solution and water added to second receptacle 38 is regulated to cause about 5 to 50 percent of the filtrate from filter 30 to be purged through overflow outlet 56 in order to further reduce the concentration of dissolved and suspended poultry debris. The cleansing fluid is typically applied to filter 30 at an impact force of at least 2.2 N (0.5 pounds-force) when measured 30.5 cm (12 inches) from the surface of filter 30. In one aspect, dispenser 36 applies the water to filter 30 for 10 to 60 seconds every 5 minutes to 5 hours at an impact force of between 2.7 to 26.7 N (0.6 to 6 pounds-force). In an alternative aspect, dispenser 36 applies the water to filter 30 constantly at an impact force of between 0.4 to 2.2 N (0.1 to 05 pounds-force). The water can also be applied to filter 30 at both the high impact and the low impact levels simultaneously.

The filtrate is collected in second receptacle 38 positioned proximate filter 30. Typically, as the filtrate is collected in second receptacle 38, enough aeration takes place in second receptacle 38 due to the excess water released from dispenser 36 to cause fat and oils not filtered through filter 30 to rise to the surface of the filtrate in second receptacle 38. During operation, the surface level of the filtrate is typically between pump outlet 54 and overflow outlet 56 of second receptacle 38. This allows any fats and oils floating at the surface level of the filtrate to be removed through overflow outlet 56 and deposited in waste receptacle 34. Separation of fat and oils in second receptacle 38 may be enhanced by injecting air, increasing the capacity, partitioning, or installing baffles in second receptacle 38. It should be noted that although FIGS. 1 and 2 discuss dispensing the antimicrobial solution from dispenser 36 onto filter 30, the antimicrobial solution can also be applied to reapplication system 10 directly in second receptacle 38, in third intermediate line 20d, or anywhere else in reapplication system 10.

The remaining reclaimed water is held in second receptacle 38 for an average of 0.5 to 10 minutes before it is pumped through third intermediate line 20d and fourth intermediate line 20e to screen 40.

The filtrate is transported through third intermediate line 20d and screen 40 as a final measure to filter any undesirable matter from the filtrate before being re-used in washing apparatus 26. After the filtrate passes through screen 40, the filtrate is pumped through discharge line 20f by second pump 18 and is returned to washing apparatus 26, where the water is re-used to cleanse poultry during inside-outside bird washing stage 12.

The poultry processing water reapplication system described herein allows processing water from the inside-outside bird washing stage of poultry processing to be reclaimed, reconditioned, and reapplied. After the poultry has been washed in a washing apparatus, the reclaimed water is then pumped to a filter that removes debris still present in the reclaimed water. While the processing water is being filtered, a dispenser expels antimicrobial solution and water onto the filter in order to remove any bacteria in the reclaimed water. The debris is removed through a removal channel and the filtrate is collected in a second receptacle. After the fats and oils remaining in the filtrate have risen to the surface of the filtrate, they are removed through an overflow outlet connected to the second receptacle. The filtrate remains in the second receptacle for a period of time before it is passed through a screen to filter out any remaining undesirable matter. After the reclaimed water has been reconditioned through the reapplication system, it is sent back to the washing apparatus where it is reused during the inside-outside bird washing process.

The water reapplication system described herein increases the efficiency of the inside-outside bird washing process by minimizing clogging from large debris, small debris, and fats and oils present in the processing water. The system prevents clogging in the filters as well as in the nozzle openings used to wash the poultry. Additionally, the antimicrobial solution added to the reclaimed water decreases the high bioburden present in the processed water after it is washed from the poultry.

## Claims

1. A method for on-site reclamation, reconditioning, and reapplication of poultry processing water, the method comprising:
(a) collecting processing water from a washing apparatus (26) into a first receptacle (28);
(b) pumping the processing water from the first receptacle (28) to a filtering apparatus;
(c) expelling the processing water into the filtering apparatus;
(d) filtering waste from the processing water to obtain a filtrate;
(e) spraying an antimicrobial solution and water onto the filtering apparatus;
(f) transporting the waste from the processing water to a waste receptacle (34);
(g) collecting the filtrate and antimicrobial solution into a second receptacle (38);
(h) purging a portion of the filtrate from the second receptacle (38) to the waste receptacle (34);
(i) pumping the filtrate back to the washing apparatus (26); and
(j) spraying the poultry with the filtrate,
wherein the filtering apparatus is a rotary filter and consists of a series of openings that allow a substantial portion of reclaimed water to pass through the filter while retaining solids greater than a given dimension, the filter being cylindrical and rotating around a nearly horizontal axis and consisting of durable or non-durable materials.

2. The method of claim 1, wherein filtering waste comprises removing waste greater than 0.03 to 0.3 mm (0.001 to 0.010 inches) in any dimension.

3. The method of claim 1, wherein spraying antimicrobial solution onto the filtering apparatus comprises spraying the antimicrobial solution at a force of at least 2.2 N (0.5 pounds-force) when measured from 30 cm (12 inches) away from the filtering apparatus.

4. The method of claim 1, wherein spraying water onto the filtering apparatus comprises spraying water for between 10 to 60 seconds every 5 minutes to 5 hours at a force of between 2.7 to 27 N (0.6 to 6 pounds-force) when measured from 30 cm (12 inches) away from the filtering apparatus and constantly spraying the water at a force of between 0.4 and 2.2N (0.1 to 0.5 pounds-force) when measured from 30 cm (12 inches) away from the filtering apparatus.

5. The method of claim 1, wherein the antimicrobial solution sprayed onto the filtering apparatus is a peroxyacid solution comprised of acetic acid, octanoic acid, hydrogen peroxide, peroxyacetic acid, peroxyoctanoic acid, and 1-hydroxyethylidene-1,1-diphosphonic acid.

6. The method of claim 1, wherein collecting the filtrate and antimicrobial solution comprises collecting a total concentration of 5 to 500 parts per million of antimicrobial solution and holding the filtrate in the second receptacle (38) for 0,5 to 10 minutes before pumping the filtrate back to the washing apparatus (26).

7. The method of claim 1, wherein purging a portion of the processing water from the second receptacle (38) comprises purging 5% to 50% of the filtrate through an overflow outlet (56).

## Patentansprüche

1. Verfahren zur Vor-Ort-Rückgewinnung, Aufarbeitung und Wiederanwendung von Geflügelverarbeitungswasser, das Verfahren Folgendes umfassend:
(a) Sammeln von Verarbeitungswasser aus einer Waschvorrichtung (26) in einem ersten Behälter (28);
(b) Pumpen des Verarbeitungswassers aus dem ersten Behälter (28) zu einer Filtervorrichtung;
(c) Ausstoßen des Verarbeitungswassers in die Filtervorrichtung;
(d) Filtrieren von Abfall aus dem Verarbeitungswasser, um ein Filtrat zu erhalten;
(e) Aufsprühen einer antimikrobiellen Lösung und Wasser auf eine Filtervorrichtung;
(f) Transportieren des Abfalls aus dem Verarbeitungswasser zu einem Abfallbehälter (34);
(g) Sammeln des Filtrats und der antimikrobiellen Lösung in einem zweiten Behälter (38);
(h) Spülen eines Abschnitts des Filtrats aus dem zweiten Behälter (38) in den Abfallbehälter (34);
(i) Pumpen des Filtrats zurück in die Waschvorrichtung (26); und
(j) Aufsprühen des Geflügels mit dem Filtrat,
wobei die Filtervorrichtung ein Rotationsfilter ist und aus einer Reihe von Öffnungen besteht, die es einem wesentlichen Abschnitt des rückgewonnenen Wassers ermöglichen, durch den Filter zu fließen, während Feststoffe, die größer als eine gegebene Abmessung sind, beibehalten werden, wobei der Filter zylindrisch ist und sich um eine nahezu horizontale Achse dreht und aus haltbaren oder nicht haltbaren Materialien besteht.

2. Verfahren nach Anspruch 1, wobei das Filtrieren von Abfall das Entfernen von Abfall, der größer als 0,03 bis 0,3 mm (0,001 bis 0,010 Zoll) in jeder Dimension ist, umfasst.

3. Verfahren nach Anspruch 1, wobei das Aufsprühen einer antimikrobiellen Lösung auf die Filtervorrichtung das Aufsprühen der antimikrobiellen Lösung bei einer Kraft von mindestens 2,2 N (0,5 Pfund-Kraft), gemessen aus 30 cm (12 Zoll) Entfernung von der Filtervorrichtung, umfasst.

4. Verfahren nach Anspruch 1, wobei das Aufsprühen von Wasser auf die Filtervorrichtung das Aufsprühen von Wasser für 10 bis 60 Sekunden alle 5 Minuten bis 5 Stunden bei einer Kraft von 2,7 bis 27 N (0,6 bis 6 Pfund-Kraft), gemessen aus 30 cm (12 Zoll) Entfernung von der Filtervorrichtung, und das ständige Aufsprühen des Wassers bei einer Kraft von 0,4 bis 2,2 N (0,1 bis 0,5 Pfund-Kraft), gemessen aus 30 cm (12 Zoll) Entfernung von der Filtervorrichtung, umfasst.

5. Verfahren nach Anspruch 1, wobei die auf die Filtervorrichtung aufgesprühte antimikrobielle Lösung eine Peroxysäurelösung ist, die Essigsäure, Octansäure, Wasserstoffperoxid, Peroxyessigsäure, Peroxyoctansäure und 1-Hydroxyethyliden-1,1-diphosphonsäure umfasst.

6. Verfahren nach Anspruch 1, wobei das Sammeln des Filtrats und der antimikrobiellen Lösung das Sammeln einer Gesamtkonzentration von 5 bis 500 Teilen pro Million antimikrobieller Lösung und das Halten des Filtrats in dem zweiten Behälter (38) für 0,5 bis 10 Minuten vordem Zurückpumpen des Filtrats in die Waschvorrichtung (26) umfasst.

7. Verfahren nach Anspruch 1, wobei das Spülen eines Teils des Verarbeitungswassers aus dem zweiten Behälter (38) das Spülen von 5 % bis 50 % des Filtrats durch einen Überlauf-Auslass (56) umfasst.

## Revendications

1. Procédé de récupération, de reconditionnement et de réutilisation sur site d'eau de traitement de volaille, le procédé comprenant :
(a) le recueil d'eau de traitement provenant d'un appareil de lavage (26) dans un premier récipient (28) ;
(b) le pompage de l'eau de traitement du premier récipient (28) vers un appareil de filtration ;
(c) l'expulsion de l'eau de traitement dans l'appareil de filtration ;
(d) la filtration de déchets provenant de l'eau de traitement pour obtenir un filtrat ;
(e) la pulvérisation d'une solution antimicrobienne et de l'eau sur l'appareil de filtration ;
(f) le transport des déchets provenant de l'eau de traitement dans un récipient à déchets (34) ;
(g) le recueil du filtrat et de la solution antimicrobienne dans un second récipient (38) ;
(h) l'épuration d'une partie du filtrat du second récipient (38) vers le récipient à déchets (34) ;
(i) le renvoi du filtrat vers l'appareil de lavage (26) par pompage ; et
(j) la pulvérisation du filtrat sur la volaille,
l'appareil de filtration étant un filtre rotatif et comprenant une série d'ouvertures permettant à une partie importante de l'eau récupérée de passer à travers le filtre tout en retenant les solides dépassant une certaine dimension, le filtre étant cylindrique et tournant autour d'un axe presque horizontal de matériaux durables ou non durables.

2. Procédé selon la revendication 1, dans lequel la filtration de déchets consiste à éliminer les déchets de plus de 0,03 à 0,3 mm (0,001 à 0,010 pouce) dans toutes les dimensions.

3. Procédé selon la revendication 1, dans lequel la pulvérisation d'une solution antimicrobienne sur l'appareil de filtration consiste à pulvériser la solution antimicrobienne à une force d'au moins 2,2 N (force de 0,5 livre) lorsqu'elle est mesurée à une distance de 30 cm (12 pouces) de l'appareil de filtration.

4. Procédé selon la revendication 1, dans lequel la pulvérisation d'eau sur l'appareil de filtration consiste à pulvériser de l'eau pendant 10 à 60 secondes toutes les 5 minutes à 5 heures à une force comprise entre 2,7 et 27 N (force comprise entre 0,6 et 6 livres) lorsqu'elle est mesurée à une distance de 30 cm (12 pouces) de l'appareil de filtration et à pulvériser constamment l'eau à une force comprise entre 0,4 et 2,2 N (force comprise entre 0,1 et 0,5 livre) lorsqu'elle est mesurée à une distance de 30 cm (12 pouces) de l'appareil de filtration.

5. Procédé selon la revendication 1, dans lequel la solution antimicrobienne pulvérisée sur l'appareil de filtration est une solution de peroxyacide constituée par l'acide acétique, l'acide octanoïque, le peroxyde d'hydrogène, l'acide peroxyacétique, l'acide peroxyoctanoïque et l'acide 1-hydroxyéthylidène-1,1-diphosphonique.

6. Procédé selon la revendication 1, dans lequel le recueil du filtrat et de la solution antimicrobienne consiste à recueillir une concentration totale comprise entre 5 et 500 parties par million de solution antimicrobienne et à maintenir le filtrat dans le second récipient (38) pendant 0,5 à 10 minutes avant de renvoyer le filtrat dans l'appareil de lavage (26) par pompage.

7. Procédé selon la revendication 1, dans lequel l'épuration d'une partie de l'eau de traitement du second récipient (38) comprend une épuration de 5 % à 50 % du filtrat à travers une sortie de trop-plein (56).
